# FASCICULE DE BREVET EUROPEEN

(11) **EP 1 324 197 B1**
(45) Date de publication et mention de la délivrance du brevet: **05.04.2017**
(21) Numéro de dépôt: 02028925.2
(22) Date de dépôt: 23.12.2002
(51) Int. Cl.: G06F 9/445

(54) **Procédé et installation de mise à jour d'un logiciel de calculateur embarqué dans un véhicule automobile**
Verfahren und Installation zur Aktualisierung eines Programms eines in einem Kraftwagen eingebetteten Rechners
Method and installation for updating a program of a computer embedded in a motor vehicle

(30) Priorité: 31.12.2001 FR 0117123
(43) Date de publication de la demande: 02.07.2003
(73) Titulaire: ROBERT BOSCH GMBH, 70442 Stuttgart (DE)
(72) Inventeur: Pasquet, Thierry, 93190 Livry Gargan (FR)

(56) Documents cités:
- EP-A- 1 128 265
- EP-A- 1 139 217
- US-A- 5 699 275

## Description

L'invention est relative à un procédé de mise à jour du logiciel d'au moins un calculateur embarqué dans un véhicule automobile.

Les véhicules automobiles, aussi bien véhicules légers que véhicules lourds, sont équipés de plus en plus de calculateurs, avec logiciels, dédiés à la gestion d'une partie ou d'une fonction du véhicule telle que freinage, direction assistée, moteur, climatisation, etc...

Les calculateurs sont généralement équipés d'une mémoire de telle sorte que le logiciel d'exploitation stocké dans cette mémoire puisse être modifié, ou amélioré.

Les véhicules comportent un ordinateur qui, notamment, échange des informations avec le ou les calculateurs pour assurer le bon fonctionnement de l'ensemble.

Les véhicules sont en outre équipés fréquemment de divers récepteurs d'ondes radio, par exemple un récepteur radio FM prévu pour recevoir une sous-porteuse selon le protocole RDS permettant la diffusion de données en plus des émissions radio habituelles, et/ou un téléphone cellulaire qui peut être branché sur la même antenne que celle du récepteur radio. Il existe également des récepteurs pour l'aide à la navigation (GPS), et des récepteurs pour des informations, transmises par radio, sur la pression et/ou l'usure des pneumatiques du véhicule.

Lorsque le constructeur du véhicule souhaite remplacer dans la mémoire d'un calculateur une version de logiciel par une version nouvelle améliorée, il lui faut rappeler tous les véhicules concernés dans des centres techniques où sera effectué la mise à jour du logiciel.

Un tel rappel de véhicules entraîne des frais élevés et prend du temps.

L'invention a pour but, surtout, de fournir un procédé de mise à jour de logiciel qui permet de réduire considérablement les frais entraînés par le chargement d'une nouvelle version, et d'effectuer rapidement ces opérations.

L'invention vise en outre à assurer des conditions optimales quant au fonctionnement du véhicule.

Le document EP 1 139 217 A décrit un procédé tel que spécifié dans le préambule de la revendication indépendante 1. Le document EP 1 128 265 A décrit également un système de reprogrammation à distance d'au moins un calculateur d'un système informatique embarqué à bord d'un véhicule automobile.

Un aspect de l'invention est un procédé tel que défini dans la revendication indépendante 1. D'autres modes de réalisation de l'invention sont spécifiés dans les revendications dépendantes attenantes.

Grâce à l'invention, le constructeur du véhicule peut effectuer une mise à jour de logiciel sans avoir à rappeler les véhicules à un centre technique de traitement. Il en résulte une souplesse et une économie considérables.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig. 1 est un schéma illustrant le procédé et l'installation de mise à jour de logiciel selon l'invention.
Fig. 2 est un autre schéma illustrant le procédé.
Fig. 3 est un organigramme résumant le fonctionnement.
Fig. 4, enfin, est un schéma illustrant la mise à jour de logiciel.

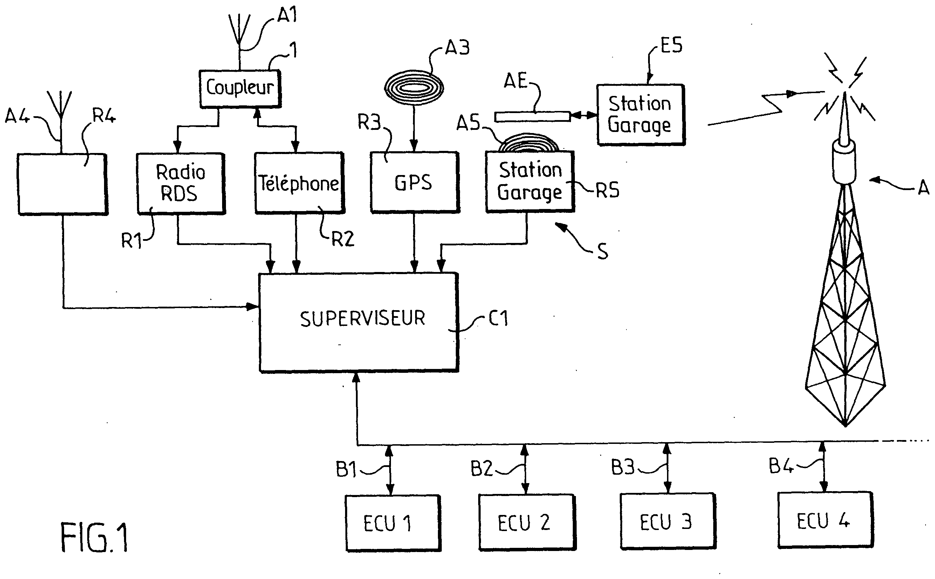

En se reportant à Fig.1 on peut voir le schéma d'un système S de mise à jour du logiciel d'au moins un calculateur embarqué dans un véhicule automobile (non montré).

Sur le schéma plusieurs calculateurs embarqués ECU1, ECU2, ECU3, ECU4...sont représentés. Les initiales ECU correspondent à l'expression "Unité de Commande Electronique" (Electronic Control Unit).

Chaque calculateur est dédié à la gestion d'une partie ou d'une fonction du véhicule. Par exemple : ECU1 est dédié à la gestion du freinage du véhicule, ECU2 à la gestion de la direction assistée, ECU3 au fonctionnement du moteur en particulier à la commande de l'injection d'essence, ECU4 est dédié à la climatisation, etc...

Chaque calculateur exécute ses tâches grâce à un logiciel enregistré dans une mémoire par exemple EEPROM ou mémoire flash.

Les calculateurs sont reliés par des faisceaux de lignes bus B1, B2, B3, B4, sommairement représentés, à un ordinateur central C1 également embarqué dans le véhicule. L'ordinateur C1 fonctionne en superviseur grâce à un programme résidant en permanence dans la mémoire centrale de l'ordinateur. Ce dernier peut ainsi contrôler l'enchaînement et la gestion des processus auxquels sont dédiés les calculateurs ECU1...ECU4....

Le véhicule est en outre équipé d'au moins un récepteur radio. Dans l'exemple de Fig.1 l'équipement comporte plusieurs récepteurs radio dédiés à différentes fonctions.

Un récepteur R1 radio numérique est prévu pour capter les émissions radio FM ainsi que des émissions numériques sur une sous-porteuse selon le protocole RDS qui permet la diffusion de données, s'affichant par exemple sur un écran sous forme alphanumérique , en plus des émissions habituelles sur un canal radio FM.

Un récepteur / émetteur radio numérique R2 est embarqué dans le véhicule pour assurer la fonction de téléphone cellulaire.

Les deux dispositifs R1, R2 sont reliés par un coupleur 1 à une même antenne A1.

Un autre récepteur radio numérique R3, relié à une antenne A3, est prévu pour l'aide à la navigation communément désignée par GPS (Global Positioning System / Système de Positionnement Global). Un quatrième récepteur R4, associé à une antenne A4 est dédié à la détection de la pression des pneus dont la valeur est transmise par radio. Le cas échéant le récepteur R4 peut également servir à la détection de signaux d'usure des pneumatiques transmis par radio.

Les différents récepteurs sont reliés à l'ordinateur superviseur C1 qui contrôle leur bon fonctionnement.

Un cinquième récepteur radio numérique R5, de préférence avec émetteur, associé à une antenne A5 est prévu pour assurer une fonction "Station Garage" permettant la mise à jour des programmes informatiques des différents calculateurs ECU1...ECU4. Le récepteur / émetteur R5 est relié au superviseur C1.

Les différents récepteurs, et émetteurs correspondants, travaillent sur des fréquences différentes permettant d'éviter des interférences.

L'émission des informations numériques destinées au récepteur R5 "Station Garage" est assurée par un ensemble émetteur / récepteur "Station Garage" E5 en liaison avec une antenne A , de préférence une antenne déjà installée pour d'autres émissions radio FM.

L'ensemble E5 peut comporter une autre antenne AE pour la réception d'informations provenant de l'émetteur de R5 et correspondant, par exemple, à une demande du conducteur du véhicule, ou client.

Pour effectuer une mise à jour de logiciel , le fournisseur de la voiture émet un code de mise à jour à partir de l'ensemble E5. Le logiciel de mise à jour recueilli par le récepteur R5 est chargé dans une mémoire tampon du superviseur C1, avec un code de redondance cyclique.

Le programme informatique du superviseur C1 assure la vérification de l'intégrité des informations reçues avant de transférer le logiciel de mise à jour au calculateur concerné.

Lorsque l'intégrité des informations reçues a été vérifiée, le superviseur C1, au prochain arrêt du véhicule, récupère le logiciel du calculateur concerné, par exemple le calculateur ECU1 dédié au freinage, et stocke cette ancienne version de logiciel dans sa mémoire. Le superviseur C1 transfère ensuite la nouvelle version de logiciel, qui était stockée en mémoire tampon, dans la mémoire du calculateur ECU1.

Le calculateur se réinitialise ; si le superviseur C1 détermine que tout fonctionne correctement, l'ancienne version de logiciel est supprimée. Par contre, si le superviseur C1 détecte un défaut de fonctionnement, il extrait la nouvelle version de logiciel du calculateur et recharge, dans le calculateur, l'ancienne version de logiciel.

Le programme de validation du superviseur C1 est protégé pour ne pas être lisible.

En réponse à la réception d'une mise à jour de logiciel, le système peut adresser un accusé de réception, par exemple par l'intermédiaire du téléphone cellulaire R2, à destination de l'émetteur/récepteur E5 "Station Garage". L'accusé de réception est prévu pour permettre d'identifier le véhicule, par exemple par le numéro série du constructeur.

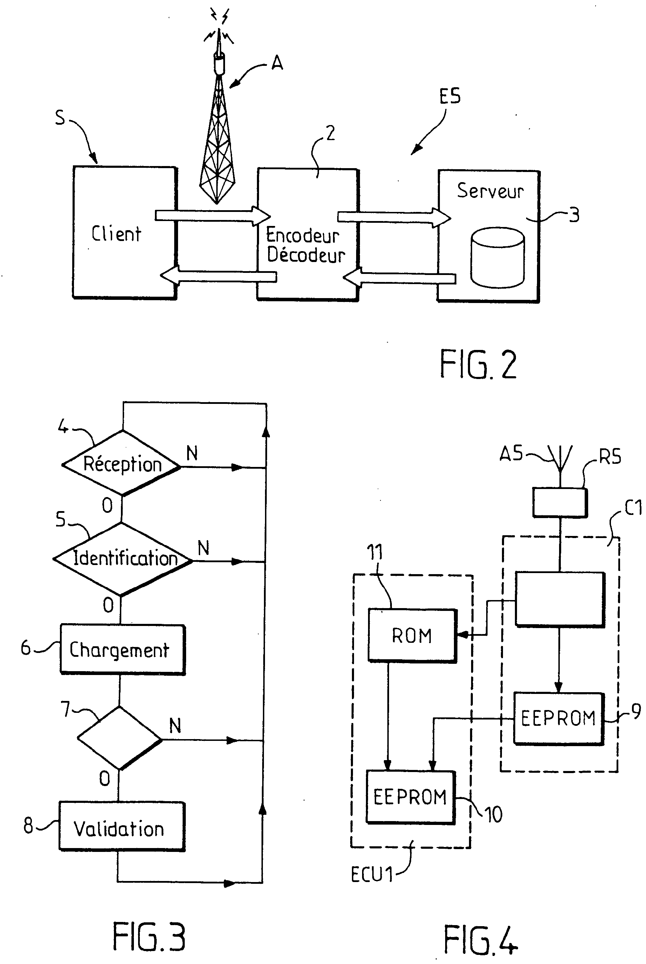

Fig.2 est un schéma illustrant un dialogue possible entre le système S embarqué dans le véhicule et la "Station Garage" E5.

Le système embarqué S du client émet, sur initiative du client / conducteur, une demande encodée transmise par l'émetteur de R5. Cette demande est recueillie par l'antenne AE de la "Station Garage" E5 et est envoyée à un circuit 2 encodeur décodeur puis transmise, après décodage, à un serveur 3. Ce dernier envoie une réponse qui transite par le circuit encodeur décodeur 2 pour être codée et qui est ensuite transmise par l'antenne A au système embarqué S du véhicule du client.

En variante, la mise à jour du logiciel pourrait être transmise sur une sous-porteuse d'une radio FM et être recueillie, par exemple, par le récepteur R1. Dans ce cas il ne serait plus nécessaire de prévoir un récepteur R5 spécialement dédié aux mises à jour.

Fig.3 est un organigramme résumant les opérations de mise à jour du logiciel d'un calculateur. L'étape 4 correspond à une interrogation pour savoir si une réception est en cours. Si la réponse est négative N, le système reste en attente de réception. Si la réponse est positive O, les informations reçues par le récepteur R5 sont transmises au superviseur C1 pour l'étape 5 d'identification.

Si le superviseur C1 établit que la mise à jour n'est pas destinée au véhicule considéré, ou si le superviseur C1 établit un défaut d'intégrité des informations reçues, une réponse négative N est fournie à cette étape 5 et le système retourne en attente de réception.

Si par contre l'intégrité de la mise à jour est établie ainsi que la bonne destination, la réponse est positive O.

A l'étape 6, dès que le véhicule est arrêté, le superviseur C1 procède à la récupération de l'ancienne version du logiciel du calculateur ECU concerné et au chargement de la nouvelle version. Le calculateur se réinitialise.

A l'étape 7 le superviseur vérifie le bon fonctionnement avec la nouvelle version. Si le bon fonctionnement n'est pas confirmé, ce qui correspond à une réponse N, la nouvelle version de logiciel est déchargée du calculateur concerné et l'ancienne version est rechargée; le système se remet en attente de réception.

Par contre si le superviseur constate le bon fonctionnement, la réponse positive O conduit à l'étape 8 de validation de la nouvelle version et à la suppression de l'ancienne version.

Le système retourne ensuite en attente de réception.

Fig.4 est un schéma illustrant la réception des informations par le superviseur C1 et le chargement de la nouvelle version de logiciel dans le calculateur par exemple ECU1. Le superviseur comporte une mémoire tampon 9 (par exemple EEPROM) par laquelle transite la nouvelle version de logiciel avant d'être transférée à une mémoire 10 (par exemple EEPROM) du calculateur ECU1. La mémoire morte 11 du calculateur est reliée à la mémoire 10 ainsi qu'au superviseur C1.

## Revendications

1. Procédé de mise á jour du logiciel d'au moins un calculateur (ECU1 - ECU4) embarqué dans un véhicule automobile, dédié á la gestion d'une partie ou d'une fonction du véhicule et équipé d'une mémoire (10) de telle sorte qu'un logiciel stocké dans cette mémoire puisse être modifié, le véhicule comportant en outre un ordinateur (C1) et au moins un récepteur d'ondes radio (R1 R5), la mise á jour du logiciel étant transmise par ondes radio sur une fréquence captée par un récepteur (R5, R1) du véhicule, et comportant une étape (7) de vérification par l'ordinateur (C1) de l'intégrité de la mise á jour de logiciel reçue et une étape, lorsque le véhicule est á l'arrêt, de remplacement de l'ancienne version du logiciel par la nouvelle version et une étape de vérification du bon fonctionnement, une étape de réinstallation de l'ancienne Version si le fonctionnement avec la nouvelle version n'apparait pas satisfaisant, **caractérisé par le fait que** l'on fait émettre, par le système embarqué dans le véhicule, un accusé de réception de la mise á jour de logiciel permettant d'identifier le véhicule concerné, que l'on prévoit un récepteur radio "Station Garage" (R5) embarqué dans le véhicule et dédié á la réception de la mise á jour de logiciel, et que
ledit récepteur radio "Station Garage" (R5) comporte également un émetteur formant un premier émetteur/récepteur embarqué pour formuler et transmettre une demande de mise à jour de logiciel à un second émetteur/récepteur "Station Garage" (E5).

2. Procédé de mise à jour de logiciel selon la revendication 1, **caractérisé par le fait qu'**un programme est installé dans l'ordinateur (C1) pour qu'il fonctionne en superviseur, qu'au moins une entrée de l'ordinateur (C1) est reliée au récepteur d'ondes radio (R5, R1) qui capte la mise á jour de logiciel, que cette mise á jour est stockée dans une mémoire tampon (9) de l'ordinateur superviseur qui vérifie l'intégrité des informations reçues, et que, lorsque l'intégrité est confirmée, l'ordinateur superviseur, lors du prochain arrêt du véhicule, récupère l'ancienne Version de logiciel du calculateur concerné et la stocke en mémoire, et transfère la nouvelle version de mise á jour vers le calculateur qui se réinitialise, que le superviseur (C1) vérifie le bon fonctionnement du calculateur et, si tout va bien, supprime l'ancienne version du logiciel tandis que si le fonctionnement ne paraît pas correct, le superviseur (C1) récupère la nouvelle version, la stocke en mémoire, et recharge le calculateur avec l'ancienne version de logiciel.

3. Installation pour effectuer une mise á jour du logiciel d'au moins un calculateur (ECU1 - ECU4) embarque dans un véhicule automobile, dédié á la gestion d'une partie ou d'une fonction du véhicule et équipé d'une mémoire de telle sorte qu'un logiciel stocké dans cette mémoire puisse être modifié, le véhicule comportant en outre un ordinateur (C1) et au moins un récepteur d'ondes radio (R1-R5), **caractérisée par le fait qu'**elle est conçue pour mettre en oeuvre un procédé selon l'une des revendications précédentes.

## Patentansprüche

1. Verfahren zur Aktualisierung der Software mindestens eines an Bord eines Kraftfahrzeugs befindlichen Rechners (ECU1-ECU4), der für die Verwaltung eines Teils oder einer Funktion des Fahrzeugs bestimmt und mit einem Speicher (10) ausgestattet ist, damit eine in diesem Speicher gespeicherte Software geändert werden kann, wobei das Fahrzeug außerdem einen Computer (C1) und mindestens einen Funkwellenempfänger (R1, R5) aufweist, wobei die Softwareaktualisierung über Funkwellen auf einer Frequenz übertragen wird, die von einem Empfänger (R5, R1) des Fahrzeugs aufgefangen wird, und einen Schritt (7) der Überprüfung der Unversehrtheit der empfangenen Softwareaktualisierung durch den Computer (C1) und einen Schritt, wenn das Fahrzeug steht, des Austauschs der alten Version der Software durch die neue Version und einen Schritt der Überprüfung des einwandfreien Betriebs, einen Schritt der erneuten Installierung der alten Version aufweist, wenn der Betrieb mit der neuen Version nicht zufriedenstellend scheint, **dadurch gekennzeichnet, dass** durch das an Bord des Fahrzeugs befindliche System eine Empfangsbescheinigung der Softwareaktualisierung erstellen gelassen wird, die es ermöglicht, das betreffende Fahrzeug zu erkennen, dass ein Funkempfänger "Station Garage" (R5) an Bord des Fahrzeugs und für den Empfang der Softwareaktualisierung bestimmt vorgesehen wird, und dass der Funkempfänger "Station Garage" (R5) ebenfalls einen Sender aufweist, der einen ersten an Bord befindlichen Sender/Empfänger bildet, um eine Anforderung einer Softwareaktualisierung zu formulieren und an einen zweiten Sender/Empfänger "Station Garage" (E5) zu übertragen.

2. Softwareaktualisierungsverfahren nach Anspruch 1, **dadurch gekennzeichnet, dass** ein Programm im Computer (C1) installiert wird, damit er als Supervisor arbeitet, dass mindestens ein Eingang des Computers (C1) mit dem Funkwellenempfänger (R5, R1) verbunden ist, der die Softwareaktualisierung auffängt, dass diese Aktualisierung in einem Pufferspeicher (9) des Computer-Supervisors gespeichert wird, der die Unversehrtheit der empfangenen Informationen überprüft, und dass, wenn die Unversehrtheit bestätigt wird, der Computer-Supervisor beim nächsten Halt des Fahrzeugs die alte Softwareversion vom betroffenen Rechner wiedergewinnt und sie im Speicher speichert, und die neue Aktualisierungsversion an den Rechner überträgt, der sich neu initialisiert, dass der Supervisor (C1) den einwandfreien Betrieb des Rechners überprüft, und wenn alles funktioniert, die alte Version der Software löscht, während, wenn der Betrieb nicht korrekt scheint, der Supervisor (C1) die neue Version wiedergewinnt, sie im Speicher speichert, und den Rechner wieder mit der alten Softwareversion lädt.

3. Anlage zur Durchführung einer Aktualisierung der Software mindestens eines an Bord eines Kraftfahrzeugs befindlichen Rechners (ECU1-ECU4), der für die Verwaltung eines Teils oder einer Funktion des Fahrzeugs bestimmt ist, und der mit einem Speicher ausgestattet ist, so dass eine in diesem Speicher gespeicherte Software geändert werden kann, wobei das Fahrzeug außerdem einen Computer (C1) und mindestens einen Funkwellenempfänger (R1-R5) aufweist, **dadurch gekennzeichnet, dass** sie konzipiert ist, um ein Verfahren nach einem der vorhergehenden Ansprüche anzuwenden.

## Claims

1. Method of updating the software of at least one chip (ECU1-ECU4) on board a motor vehicle, dedicated to the management of a part or of a function of the vehicle and equipped with a memory (10) such that an item of software stored in this memory can be modified, the vehicle furthermore comprising a computer (C1) and at least one receiver of radio waves (R1-R5), the software update being transmitted by radio waves on a frequency picked up by a receiver (R5, R1) of the vehicle, and comprising, by the computer (C1), a step of verification of the integrity of the software update received and a step, when the vehicle has stopped, of replacement of the old version of the software by the new version and a step of verification of correct operation, a step of reinstallation of the old version if operation with the new version does not appear to be satisfactory, **characterized in that** the system on board the vehicle is made to transmit an acknowledgement of receipt of the software update allowing the vehicle concerned to be identified, that a "Garage Station" radio receiver (R5) on board the vehicle and dedicated to the reception of the software update is provided, and that said "Garage Station" radio (R5) also comprises a transmitter forming a first on board transmitter/receiver for formulating and transmitting a software update request to a second "Garage Station" transmitter/receiver (E5).

2. Method of updating software according to Claim 1, **characterized in that** a program is installed in the computer (C1) so that it operates as a supervisor, that at least one input of the computer (C1) is linked to the receiver of radio waves (R5, R1) which picks up the software update, that this update is stored in a buffer memory (9) of the supervisor computer which verifies the integrity of the information received, and that, when the integrity is confirmed, the supervisor computer, when the vehicle stops next, retrieves the old software version from the chip concerned and stores it in memory, and transfers the new update version to the chip which reinitializes itself, that the supervisor (C1) verifies correct operation of the chip and, if all goes well, deletes the old version of the software whereas if operation does not appear to be correct, the supervisor (C1) retrieves the new version, stores it in memory, and reloads the chip with the old software version.

3. Installation for performing an update of the software of at least one chip (ECU1-ECU4) on board a motor vehicle, dedicated to the management of a part or of a function of the vehicle and equipped with a memory such that an item of software stored in this memory can be modified, the vehicle furthermore comprising a computer (C1) and at least one receiver of radio waves (R1-R5), **characterized in that** it is designed to implement a method according to either of the preceding claims.
